# EUROPÄISCHE PATENTSCHRIFT

(11) **EP 4 650 104 B1**
(45) Veröffentlichungstag und Bekanntmachung des Hinweises auf die Patenterteilung: **30.09.2026**
(21) Anmeldenummer: 25171512.4
(22) Anmeldetag: 19.04.2025
(51) Int. Cl.: B24B 41/04, B24B 47/12, F16C 19/52, F16C 19/54, F16C 35/063, F16C 35/067

(54) **WERKZEUGANORDNUNG, INSBESONDERE SCHLEIFANORDNUNG**
TOOL ARRANGEMENT, IN PARTICULAR GRINDING ARRANGEMENT
ENSEMBLE D'OUTIL, EN PARTICULIER ENSEMBLE DE MEULAGE

(30) Priorität: 16.05.2024 DE 102024113823
(43) Veröffentlichungstag der Anmeldung: 19.11.2025
(73) Patentinhaber: Kapp Niles GmbH & Co. KG, 96450 Coburg (DE)
(72) Erfinder: Grinko, Sergiy, 96450 Coburg (DE); Schilling, Nico, 96486 Lautertal (DE); Stegner, Achim, 96450 Coburg (DE); Luther, Lars, 96484 Meeder (DE); Armborst, Holger, 96515 Sonneberg (DE); Gleichmann, Julian, 96484 Meeder (DE)
(74) Vertreter: Gosdin, Carstensen & Partner Patentanwälte Partnerschaftgesellschaft mbB

(56) Entgegenhaltungen:
- DE-A1- 102006 009 786
- US-A- 2 635 018

## Beschreibung

Die Erfindung betrifft eine Werkzeuganordnung, insbesondere Schleifanordnung, umfassend eine Werkzeugspindel mit einem ortsfesten ersten Teil und einem sich relativ zum ersten Teil drehbar gelagerten zweiten Teil, wobei der zweite Teil ein Werkzeug, insbesondere ein Schleifwerkzeug, trägt, wobei ein Antriebsmotor mit einem Stator und einem Rotor angeordnet ist, um das zweite Teil relativ zum ersten Teil zu drehen, wobei der erste Teil der Werkzeugspindel durch den Stator des Antriebsmotors gebildet wird, wobei der zweite Teil durch den Rotor des Antriebsmotors gebildet wird, wobei am Außenumfang des Rotors eine Sitzfläche für das Werkzeug ausgebildet ist, wobei sich der Stator in eine Achsrichtung erstreckt und an einer ersten axialen Position mindestens eine erste Lagerung und an einer zweiten axialen Position mindestens eine zweite Lagerung angeordnet ist und wobei beide Lagerungen den Rotor relativ zum Stator drehbar lagern.

Eine gattungsgemäße Schleifanordnung wird in der DE 10 2006 009 786 A1 beschrieben. Ein Antriebsmotor treibt die Werkzeugspindel an, wobei deren sich drehender Teil das Schleifwerkzeug trägt. Die genannte Lösung sieht hier bereits zwecks Erreichens eines kompakten Aufbaus vor, dass der Rotor des Motors direkt als Aufnahme für das Schleifwerkzeug ausgebildet ist.

Weitere ähnliche Lösungen sind in der DE 10 2009 038 223 A1 und in der WO 2005/056195 A1 offenbart.

Beim Schleifen von Innenverzahnungen bzw. -profilen wird die Werkzeugspindel häufig an bzw. in einem Schleifarm angeordnet. Dabei stellt sich zumeist das Problem, dass die Werkzeugspindel auf sehr engem Bauraum untergebracht werden soll. Eine Lösung mit Schleifarm wird beispielsweise in der EP 0 416 151 A1 beschrieben. Die Werkzeugspindel ist hier im axialen Endbereich eines rohrförmigen Schleifarms angeordnet, wobei der Antriebsmotor im anderen axialen Endbereich des Schleifarms positioniert ist. Das Drehmoment des Antriebsmotors wird über einen Riementrieb auf die Werkzeugspindel übertragen. Eine ähnliche Lösung zeigt die DE 10 2016 012 915 A1.

Bei Werkzeugspindeln üblicher Bauweise erfolgt zumeist die Abstützung der Bearbeitungslasten oder auch der Kräfte, die infolge von Unwucht entstehen, über eine entsprechende Lagerung, die teilweise räumlich relativ weit entfernt von der Werkzeugaufnahme liegt. Daher kommen hier häufig Gegenlager zum Einsatz, die eine zusätzliche Stützfunktion bieten. Eine solche Lösung betrifft auch die genannte DE 10 2006 009 786 A1, bei der der relativ lang ausgebildete Stator durch zwei weit beabstandete Lager gelagert wird.

Weiterhin haben große Abstände und Fügestellen negative Auswirkungen auf die mechanischen Übertragungsstrecken zwischen einem benötigten Messsystem, der Antriebsmomenteinleitung und der Bearbeitungslasteinleitung (am Ort des Werkzeugs). Nachteilig ergibt sich hierdurch sowohl eine statische als auch dynamische Nachgiebigkeit infolge der nötigen Trennstellen.

Daher ist bei derartigen Werkzeugspindeln klassischer Bauweise die Beurteilung der eingetragenen Lasten beispielsweise durch Auswertung des Motorstroms genauso problematisch, wie die genaue Messung der Lage der Spindel und Erfassung weiterer Daten. Auch wird die Beurteilung des Schwingungsverhaltens und die Erfassung von Schwingungsamplituden durch die relativ weiten mechanischen Übertragungsstrecken schwierig.

Der Erfindung liegt die **Aufgabe** zugrunde, eine Schleifanordnung der eingangs genannten Art so fortzubilden, dass eine noch kompaktere Einheit als bei der vorbekannten Lösung entsteht, die sich besonders für eine Wälzschleif-Bearbeitung eignet. Demgemäß sollen die Bewegungen des Werkzeugs präzise erfasst und geregelt werden können. Dennoch wird eine hohe Motorleistung angestrebt. Dabei wird eine Konstruktion angestrebt, die einerseits nur einen geringen Bauraum benötigt, andererseits aber mit relativ wenigen Teilen realisiert werden kann, so dass eine kostengünstige Fertigung möglich ist. Damit soll eine hochproduktive Wälzbearbeitung insbesondere von Innenverzahnungen unter praxisüblichen Bedingungen ermöglicht werden. Ferner soll hinreichender Raum für die Wicklungen des Motors zur Verfügung stehen.

Die **Lösung** dieser Aufgabe durch die Erfindung ist dadurch gekennzeichnet, dass die erste Lagerung mindestens einen Innenring aufweist, der am Außenumfang des Stators angeordnet ist, und mindestens einen Außenring aufweist, der an einer innenliegenden zylindrischen Fläche des Rotors angeordnet ist, wobei die zweite Lagerung mindestens einen Außenring aufweist, der an einer innenliegenden zylindrischen Fläche des Stators angeordnet ist, und mindestens einen Innenring aufweist, der an einer außenliegenden zylindrischen Fläche eines Deckels angeordnet ist, der mit dem Rotor verbunden ist.

"Innenliegend" bedeutet insofern, dass die Normale auf die Oberfläche radial nach innen weist; "außenliegend" bedeutet insofern, dass die Normale auf die Oberfläche radial nach außen weist.

Bevorzugt ist dabei vorgesehen, dass der Deckel mit dem mindestens einen Innenring der zweiten Lagerung und mit dem Rotor verbunden und ansonsten frei von einer Verbindung zu einem weiteren Maschinenteil ist, so dass der Rotor fliegend auf dem Stator gelagert ist.

Der Stator ist vorzugsweise fest mit dem Endbereich eines stab- oder rohrförmigen Schleifarms verbunden.

Am Außenumfang des Stators ist zumeist mindestens eine stromdurchflossene Motorwicklung angeordnet.

Die Lagerungen (erste und/oder zweite Lagerung) umfassen vorzugsweise (je) zwei Schrägkugellager; die beiden Schrägkugellager sind dabei insbesondere in O-Anordnung angeordnet.

Der Rotor kann im Bereich der Sitzfläche für das Schleifwerkzeug ein Gewinde für die Aufnahme einer Spannmutter aufweisen. Alternativ kann natürlich auch eine andere Art der Befestigung und insbesondere der axialen Einspannung des Schleifwerkzeugs auf dem Rotor vorgesehen werden (z. B. mittels Schrauben).

Die Werkzeuganordnung umfasst bevorzugt einen Positions- oder Drehgeber, der eine Maßverkörperung aufweist, die am Rotor angeordnet ist, sowie mindestens einen Lesekopf aufweist, der am Stator oder an einem mit diesem verbundenen Bauteil, insbesondere am Schleifarm, angeordnet ist. Der Positions- oder Drehgeber ist dabei bevorzugt an der oben genannten ersten axialen Position oder benachbart zu dieser angeordnet.

Als günstiger Ort für die Anordnung des Positions- oder Drehgebers hat sich auch der Bereich zwischen dem Werkzeug (bzw. einem flanschförmigen Abschnitt des Rotors, welcher einen axialen Anschlag für das Werkzeug bildet) und dem Schleifarm ergeben.

Durch den oben genannten Deckel wird die gesamte Anordnung zuverlässig im einen axialen Endbereich des Werkzeugs abgedichtet. Um auch im anderen axialen Endbereich des Werkzeugs das Eindringen von Medien zu verhindern, sieht eine bevorzugte Weiterbildung vor, dass zwischen dem Schleifarm und dem Rotor eine Dichtung angeordnet ist. Dabei ist besonders bevorzugt vorgesehen, dass die Dichtung als Sperrluftdichtung oder als Labyrinthdichtung ausgebildet ist.

Mit dieser Ausgestaltung wird sowohl eine stabile (fliegende) Lagerung des Rotors relativ zum Stator gewährleistet (d. h. ohne Gegenlager) als auch eine gut abgedichtete Einheit geschaffen, die eine kompakte Bauweise aufweist. Durch die genannte Dichtung zwischen dem Schleifarm und dem Rotor kann eine insgesamt zuverlässige Abdichtung der gesamten Werkzeuganordnung mit nur einer Dichtstelle bewerkstelligt werden.

Der Stator des Antriebsmotors ist dabei vorteilhaft so gelagert, dass mindestens eine Lagerung (nämlich die oben genannte zweite Lagerung) innen in der Statorwelle mit feststehendem Außenring bzw. Außenringen angeordnet ist, wobei die Rotoraufnahme mit der Statorwelle mit einem Deckelelement durch die zweite Lagerung kapselnd verbunden ist.

Somit wird gemäß dem Vorschlag eine Schleifvorrichtung und insbesondere ein Schleifarm bevorzugt für das Schleifen von innenverzahnten Bauteilen bzw. Bauteilen mit Innenprofilen bereitgestellt (wenngleich natürlich auch außenverzahnte Bauteile bzw. Bauteile mit Außenprofilen bearbeitet werden können), bei der bzw. bei dem ein direktangetriebener Motor in Form eines Außenläufers zum Einsatz kommt, welcher bevorzugt mit einem Messsystem zur Motorsteuerung bzw. -regelung ausgestattet ist. Der Rotor des Motors dient direkt als Werkzeugaufnahme für eine Schleifschnecke oder eine Schleifscheibe.

Die vorgeschlagene Schleifanordnung kommt bevorzugt beim Innenwälzschleifen zum Einsatz, bei dem als Schleifwerkzeug eine Schleifschnecke eingesetzt wird, die ein Innenprofil schleift. Der Vorteil ist ein wirkstellennaher Direktantrieb des Werkzeugs, der die Möglichkeit für eine präzise Drehbewegung des Werkzeugs bietet, die beim Wälzschleifen eine besonders wichtige Rolle spielt.

Durch den erfindungsgemäßen Vorschlag wird ein relativ kleiner, dennoch allerdings leistungsfähiger Motor zum direkten Antrieb des Schleifwerkzeugs bereitgestellt, was sich bei der Einbringung der Verzahnung in innenverzahnte Werkstücke besonders eignet. Dabei werden insbesondere folgende Funktionen durch Anordnung entsprechender Komponenten bereitgestellt:
Die Aufnahme für das Schleifwerkzeug ist so gestaltet, dass ein schnelles Wechseln des Werkzeugs möglich ist.

Durch einen Positionsgeber (bestehend aus Maßverkörperung und Lesekopf) kann die genaue Drehposition des Werkzeugs erfasst und entsprechend geregelt werden, was für das Wälzschleifen besondere Bedeutung hat.

Es kann ein Körperschallsensor integriert werden, mit dem die Einrichtung des Schleifprozesses vereinfacht und eine Überwachung des Systems ermöglicht wird.

Die eingesetzte Lagerung des Rotors relativ zum Stator kann mit einer entsprechenden Schmierung (gegebenenfalls auch Lebensdauerschmierung) versehen werden.

Es können Maßnahmen zur Ableitung von Verlustleistung integriert werden.

Das System ist, insbesondere durch die Anordnung entsprechender Abdichtungen, resistent gegen Einwirkungen des Mediums (Schleiföl) welches für die Bearbeitung benötigt wird.

Die Anordnung stellt eine hinreichende mechanische Leistung bereit, die trotz des kompakten Aufbaus möglich ist.

Das vorgeschlagene Konzept ermöglicht eine hohe Dynamik der Regelung und somit eine präzise Fertigung der Verzahnung bzw. des Profils. Somit kann eine hohe Achsdynamik erreicht werden, was bessere Bearbeitungsergebnisse liefert. Die wirkstellennahe Messung erlaubt eine bessere Korrelation zwischen Messung und tatsächlicher Schwingungsamplitude an der Verzahnung.

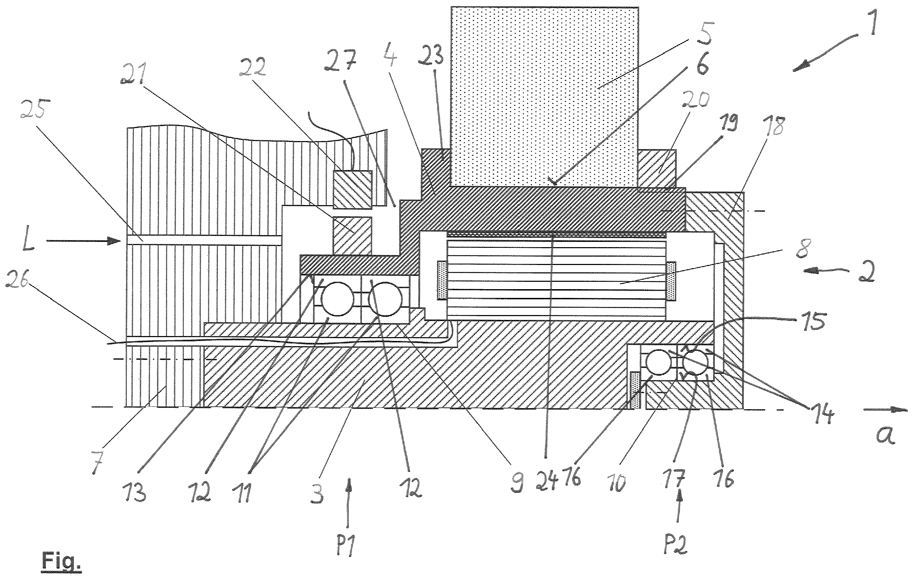

In der Zeichnung ist ein Ausführungsbeispiel der Erfindung dargestellt. Die einzige Figur zeigt den Radialschnitt durch das Ende eines Schleifarms, an dem eine angetriebene Schleifspindel samt Schleifwerkzeug angeordnet ist.

In der Figur ist der Endbereich eines (nur angedeutet dargestellten) stab- oder rohrförmigen Schleifarms 7 zu sehen. Im Endbereich des Schleifarms 7 ist eine Werkzeugspindel 2 angeordnet, die ein Schleifwerkzeug 5 in Form einer Schleifschnecke trägt. Hierdurch wird eine Schleifanordnung 1 gebildet.

Die Werkzeugspindel 2 besteht aus einem ersten Teil 3 sowie aus einem zweiten Teil 4. Der erste Teil 3 ist fest mit dem Schleifarm 7 verbunden und ist als Stator des Antriebsmotors der Werkzeugspindel 2 ausgebildet. Der zweite Teil 4 ist relativ zum ersten Teil 3 drehbar gelagert und als Rotor des Antriebsmotors der Werkzeugspindel 2 ausgebildet. Hierzu weist der Rotor 4 an seinem äußeren Umfang eine zylindrische Sitzfläche 6 auf, welche für die Aufnahme der Schleifschnecke 5 ausgebildet ist.

Damit die Schleifschnecke 5 sicher und axial eingespannt auf dem Rotor 4 montiert werden kann, weist im Ausführungsbeispiel der äußere Umfang des Rotors 4 ein Gewinde 19 auf, auf welches eine Spannmutter 20 aufgeschraubt werden kann, um die Schleifschnecke zu spannen. Hierzu weist der Rotor 4 einen flanschförmig verbreiteten Abschnitt 23 auf, der als axiale Anlagefläche für die Schleifschnecke 5 dient.

Alternativ zur Spannmutter können natürlich auch andere Lösungen zur Festlegung der Schleifschnecke 5 am Rotor 4 vorgesehen werden, insbesondere eine Schraubverbindung mit Schrauben, deren Längsachse in Achsrichtung a verlaufen.

Am Stator 3 ist eine Motorwicklung 8 angeordnet, um das Antriebsmoment zu erzeugen, wenn die Motorwicklung 8 von einem Strom durchflossen wird. Am Rotor 4 ist an einer radial innenliegenden Fläche eine Anzahl an Magneten 24 angeordnet.

Die Lagerung des Rotors 4 relativ zum Stator 3 ist in besonderer Weise ausgeführt, um vorteilhaft eine kompakte und abgedichtete Einheit zu schaffen. Hierzu ist eine erste Lagerung 9 und eine zweite Lagerung 10 vorgesehen, welche entlang der Achsrichtung a an einer ersten Position P1 bzw. an einer zweiten Position P2 angeordnet sind. Im Ausführungsbeispiel bestehen beide Lagerungen 9 und 10 jeweils aus zwei Schrägkugellagern, die in O-Anordnung benachbart angeordnet sind.

Dabei weist der Rotor 4 eine innenliegende zylindrische Fläche 13 auf, an welcher die Außenringe 12 der ersten Lagerung 9 anliegen. Die Innenringe 11 der ersten Lagerung 9 sind am Außenumfang des Stators 3 montiert.

Der Stator 3 weist in seinem vom Schleifarm 7 abgewandten Ende eine Eindrehung auf, die eine innenliegende zylindrische Fläche 15 bildet. An dieser liegen die Außenringe 14 der zweiten Lagerung 10 an. Die Verbindung zwischen Stator 3 und Rotor 4 wird hier mittels eines Deckels 18 hergestellt, welcher in seinem radial innenliegenden Bereich eine außenliegende zylindrische Fläche 17 aufweist, welche die Innenringe 16 der zweiten Lagerung 10 aufnimmt. Im radial außenliegenden Bereich des Deckels 18 ist dieser mit dem Rotor 4 verschraubt.

Da die Schleifanordnung 1 insbesondere zum Wälzschleifen einer Innenverzahnung eingesetzt werden soll, kommt der genauen Dreh-Position der Schleifschnecke 5 während der Bearbeitung besondere Bedeutung zu, da diese mit der Rotation des (nicht dargestellten) zu bearbeitenden Werkstücks abgestimmt sein muss.

Um dies in präziser Weise zu erreichen, ist am Rotor 4 ein Positions- oder Drehgeber 21, 22 befestigt, der im Ausführungsbeispiel am Ort der ersten axialen Position P1 platziert ist. Unter Bildung eines Luftspalts ist mindestens ein Lesekopf 22 im Schleifarm 7 montiert, der eine Maßverkörperung 21 erfasst, so dass die genaue Drehlage des Rotors 4 ermittelt werden kann. Die Maßverkörperung kann als separates Bauteil am Rotor angeordnet sein oder aber auch in den Rotor eingearbeitet sein (z. B. als Lasergravur).

Somit bildet die Schleifanordnung 1 eine direktangetriebene Schleifspindel, wobei es sich beim zum Einsatz kommenden Antriebsmotor um einen Außenläufer handelt.

Die Einleitung des Antriebsdrehmoments erfolgt direkt auf den außenlaufenden Rotor, welcher das Werkzeug, das heißt im vorliegenden Falle die Schleifschnecke 5, trägt.

Somit liegt eine direkte lineare mechanische Übertragungsstrecke für die Einleitung des Motordrehmoments auf das Werkstück (und somit auf die Bearbeitungslast) vor. Damit können Nichtlinearitäten bei der Übertragung des Drehmoments auf das Werkstück vermieden werden; weiterhin liegt nur eine geringe statische und dynamische Nachgiebigkeit vor.

Die direkt am Rotor 4 angeordnete oder montierte Maßverkörperung 21 für das Lagemesssystem ist durch die nahe Anbindung an das Werkzeug 5 ebenfalls vorteilhaft und erlaubt eine sehr direkte Messung. Das Messsystem ist also direkt am außenlaufenden Rotor 4 montiert und kann somit ohne Umwege die Rotorposition und somit die Werkzeugposition messen.

Die zuverlässige Abdichtung der Schleifanordnung 1 gewährleistet der Deckel 18 im einen axialen Endbereich des Werkzeugs 5. Im anderen axialen Endbereich (im Bereich des flanschförmigen Abschnitts 23) erfolgt die Abdichtung durch eine Dichtung 27. Diese wird im Ausführungsbeispiel mittels Sperrluft (Luft L) realisiert, wobei die Luft L über den Sperrluftkanal 25 zugeführt wird, so dass auch hier eine zuverlässige Abdichtung vorliegt. Alternativ oder additiv kann die Dichtung 27 beispielsweise auch durch eine (nicht dargestellte) Labyrinthdichtung erfolgen.

Die elektrische Versorgung der Motorwicklung 8 erfolgt durch eine Stromleitung 26, die in einem entsprechend ausgebildeten Kanal verläuft.

Durch den vorgeschlagenen wirkstellennahen Direktantrieb des Schleifwerkzeugs 5 mit entsprechender Spindellagerung im Außenläuferdesign ergeben sich insbesondere folgende Vorteile:
Es kann eine verbesserte Wälzkopplung zwischen Werkzeug und Werkstück realisiert werden, was durch eine ungestörte Regelung begünstigt wird; dies ergibt sich aufgrund der günstigen mechanischen Übertragungsstrecke.

Es liegt eine hohe Steifigkeit gegenüber Bearbeitungslasten vor, was insbesondere durch die genannte günstige Lageranordnung und -positionierung bewerkstelligt wird. Diesbezüglich kann auch auf eine Gegenlagerung verzichtet werden, was sich aufgrund der Lasteinleitung zur vorgeschlagenen Lagerung ergibt.

Es ergibt sich eine sehr kompakte Bauweise für die Schleifanordnung mit direkter Werkzeugaufnahme.

Eine wirkstellennahe Messung erlaubt eine verbesserte Beurteilung der Schwingungsanregung im Verzahnungsbereich.

Die Schleifanordnung benötigt nur relativ wenige Bauteile und kann somit kostengünstig gefertigt werden.

Durch die Konzeption wird auch eine höhere Dynamik und dynamischere Motorregelung ermöglicht.

Bei der Montage der Schleifanordnung kann der komplett vormontierte Stator 3 in den Schleifarm und namentlich in eine dort vorgesehene Ausnehmung erfolgen. Dann erfolgt das Verschrauben des Stators 3 am Schleifarm 7 (s. die Schraubenachse unterhalb der Stromleitung 26 in der Figur).

### Bezugszeichenliste:

- 1: Werkzeuganordnung (Schleifanordnung)
- 2: Werkzeugspindel
- 3: erster Teil der Werkzeugspindel (Stator)
- 4: zweiter Teil der Werkzeugspindel (Rotor)
- 5: Werkzeug (Schleifwerkzeug, insbesondere Schleifschnecke)
- 6: Sitzfläche für das Werkzeug, insbesondere für das Schleifwerkzeug
- 7: Schleifarm
- 8: Motorwicklung
- 9: erste Lagerung
- 10: zweite Lagerung
- 11: Innenring oder Innenringe der ersten Lagerung
- 12: Außenring oder Außenringe der ersten Lagerung
- 13: innenliegende zylindrische Fläche des Rotors
- 14: Außenring oder Außenringe der zweiten Lagerung
- 15: innenliegende zylindrische Fläche des Stators
- 16: Innenring oder Innenringe der zweiten Lagerung
- 17: außenliegende zylindrische Fläche des Deckels
- 18: Deckel
- 19: Gewinde
- 20: Spannmutter
- 21, 22: Positionsgeber / Drehgeber
- 21: Maßverkörperung
- 22: Lesekopf
- 23: flanschförmiger Abschnitt
- 24: Magnet
- 25: Sperrluftkanal
- 26: Stromleitung
- 27: Dichtung

- a: Achsrichtung

- P1: erste axiale Position
- P2: zweite axiale Position (von der ersten axialen Position verschieden)

- L: Luft (Sperrluft)

## Patentansprüche

1. Werkzeuganordnung (1), insbesondere Schleifanordnung, umfassend eine Werkzeugspindel (2) mit einem ortsfesten ersten Teil (3) und einem sich relativ zum ersten Teil (3) drehbar gelagerten zweiten Teil (4), wobei der zweite Teil (4) ein Werkzeug (5), insbesondere ein Schleifwerkzeug (5), trägt, wobei ein Antriebsmotor mit einem Stator und einem Rotor angeordnet ist, um das zweite Teil (4) relativ zum ersten Teil (3) zu drehen, wobei der erste Teil (3) der Werkzeugspindel (2) durch den Stator des Antriebsmotors gebildet wird, wobei der zweite Teil (4) durch den Rotor des Antriebsmotors gebildet wird, wobei am Außenumfang des Rotors (4) eine Sitzfläche (6) für das Werkzeug (5) ausgebildet ist, wobei sich der Stator (3) in Achsrichtung (a) erstreckt und an einer ersten axialen Position (P1) mindestens eine erste Lagerung (9) und an einer zweiten axialen Position (P2) mindestens eine zweite Lagerung (10) angeordnet ist und wobei beide Lagerungen (9, 10) den Rotor (4) relativ zum Stator (3) drehbar lagern,
**dadurch gekennzeichnet,**
**dass** die erste Lagerung (9) mindestens einen Innenring (11) aufweist, der am Außenumfang des Stators (3) angeordnet ist, und mindestens einen Außenring (12) aufweist, der an einer innenliegenden zylindrischen Fläche (13) des Rotors (4) angeordnet ist, wobei die zweite Lagerung (10) mindestens einen Außenring (14) aufweist, der an einer innenliegenden zylindrischen Fläche (15) des Stators (3) angeordnet ist, und mindestens einen Innenring (16) aufweist, der an einer außenliegenden zylindrischen Fläche (17) eines Deckels (18) angeordnet ist, der mit dem Rotor (4) verbunden ist.

2. Werkzeuganordnung nach Anspruch 1, **dadurch gekennzeichnet, dass** der Deckel (18) mit dem mindestens einen Innenring (16) der zweiten Lagerung (10) und mit dem Rotor (4) verbunden und ansonsten frei von einer Verbindung zu einem weiteren Maschinenteil ist, so dass der Rotor (4) fliegend auf dem Stator (3) gelagert ist.

3. Werkzeuganordnung nach Anspruch 1 oder 2, **dadurch gekennzeichnet, dass** der Stator (3) fest mit dem Endbereich eines stab- oder rohrförmigen Schleifarms (7) verbunden ist.

4. Werkzeuganordnung nach einem der Ansprüche 1 bis 3, **dadurch gekennzeichnet, dass** am Außenumfang des Stators (3) mindestens eine stromdurchflossene Motorwicklung (8) angeordnet ist.

5. Werkzeuganordnung nach einem der Ansprüche 1 bis 4, **dadurch gekennzeichnet, dass** die erste Lagerung (9) und/oder die zweite Lagerung (10) zwei Schrägkugellager umfasst, wobei die beiden Schrägkugellager vorzugsweise in O-Anordnung angeordnet sind.

6. Werkzeuganordnung nach einem der Ansprüche 1 bis 5, **dadurch gekennzeichnet, dass** der Rotor (4) im Bereich der Sitzfläche (6) für das Werkzeug (5), insbesondere für das Schleifwerkzeug, ein Gewinde (19) für die Aufnahme einer Spannmutter (20) aufweist.

7. Werkzeuganordnung nach einem der Ansprüche 1 bis 6, **dadurch gekennzeichnet, dass** sie einen Positions- oder Drehgeber (21, 22) umfasst, der eine Maßverkörperung (21) aufweist, die am Rotor (4) angeordnet ist, sowie mindestens einen Lesekopf (22) aufweist, der am Stator (3) oder an einem mit diesem verbundenen Bauteil, insbesondere am Schleifarm (7), angeordnet ist.

8. Werkzeuganordnung nach Anspruch 7, **dadurch gekennzeichnet, dass** der Positions- oder Drehgeber (21, 22) an der ersten axialen Position (P1) oder benachbart zu dieser angeordnet ist.

9. Werkzeuganordnung nach Anspruch 3, **dadurch gekennzeichnet, dass** zwischen dem Schleifarm (7) und dem Rotor (4) eine Dichtung (27) angeordnet ist.

10. Werkzeuganordnung nach Anspruch 9, **dadurch gekennzeichnet, dass** die Dichtung (27) als Sperrluftdichtung oder als Labyrinthdichtung ausgebildet ist.

## Claims

1. Tool arrangement (1), in particular grinding arrangement, comprising a tool spindle (2) having a fixed first part (3) and a second part (4) which is rotatably mounted relative to the first part (3), wherein the second part (4) carries a tool (5), in particular a grinding tool (5), wherein a drive motor having a stator and a rotor being arranged to rotate the second part (4) relative to the first part (3), wherein the first part (3) of the tool spindle (2) is formed by the stator of the drive motor, wherein the second part (4) is formed by the rotor of the drive motor, wherein a seat (6) for the tool (5) is formed on the outer circumference of the rotor (4), wherein the stator (3) extends in axial direction (a) and at least one first bearing (9) is arranged at a first axial position (P1) and at least one second bearing (10) is arranged at a second axial position (P2), and wherein the two bearings (9, 10) rotatably support the rotor (4) relative to the stator (3),
**characterizing in**
**that** the first bearing (9) has at least one inner ring (11), which is arranged on the outer circumference of the stator (3), and at least one outer ring (12), which is arranged on an inner cylindrical surface (13) of the rotor (4), wherein the second bearing (10) has at least one outer ring (14) which is arranged on an inner cylindrical surface (15) of the stator (3), and at least one inner ring (16), which is arranged on an outer cylindrical surface (17) of a cover (18) that is connected to the rotor (4).

2. Tool arrangement according to claim 1, **characterised in that** the cover (18) is connected to the at least one inner ring (16) of the second bearing (10) and to the rotor (4) and is otherwise free of a connection to a further machine part, so that the rotor (4) is mounted in an overhung manner on the stator (3).

3. Tool arrangement according to claim 1 or 2, **characterised in that** the stator (3) is fixedly connected to the end region of a rod- or tube-shaped grinding arm (7).

4. Tool arrangement according to one of claims 1 to 3, **characterised in that** at least one current-carrying motor winding (8) is arranged on the outer circumference of the stator (3).

5. Tool arrangement according to one of claims 1 to 4, **characterised in that** the first bearing (9) and/or the second bearing (10) comprises two angular contact ball bearings, wherein the two angular contact ball bearings are preferably arranged in an O-arrangement.

6. Tool arrangement according to one of claims 1 to 5, **characterised in that** the rotor (4) has a thread (19) in the region of the seat (6) for the tool (5), especially for the grinding tool, for receiving a clamping nut (20).

7. Tool arrangement according to one of claims 1 to 6, **characterised in that** it comprises a position or rotation encoder (21, 22) which has a measuring scale (21) that is arranged on the rotor (4), and at least one reading head (22) that is arranged on the stator (3) or on a component connected to it, in particular on the grinding arm (7).

8. Tool arrangement according to claim 7, **characterised in that** the position or rotation encoder (21, 22) is arranged at the first axial position (P1) or adjacent thereto.

9. Tool arrangement according to claim 3, **characterised in that** a seal (27) is arranged between the grinding arm (7) and the rotor (4).

10. Tool arrangement according to claim 9, **characterised in that** the seal (27) is designed as a sealing air seal or as a labyrinth seal.

## Revendications

1. Agencement d'outil (1), en particulier agencement de meulage, comprenant une broche (2) d'outil pourvue d'une première pièce (3) fixe et d'une seconde pièce (4) logée de manière rotative par rapport à la première pièce (3), la seconde pièce (4) portant un outil (5), en particulier un outil de meulage (5), un moteur d'entraînement pourvu d'un stator et d'un rotor étant agencé afin de faire tourner la seconde pièce (4) par rapport à la première pièce (3), la première pièce (3) de la broche (2) d'outil étant formée par le stator du moteur d'entraînement, la seconde pièce (4) étant formée par le rotor du moteur d'entraînement, une surface d'appui (6) pour l'outil (5) étant conçue au niveau de la périphérie externe du rotor (4), le stator (3) s'étendant dans la direction axiale (a) et au moins un premier palier (9) étant agencé au niveau d'une première position axiale (P1) et au moins un second palier (10) étant agencé au niveau d'une seconde position axiale (P2) et les deux paliers (9, 10) logeant le rotor (4) de manière rotative par rapport au stator (3),
**caractérisé**
**en ce que** le premier palier (9) présente au moins une bague interne (11), qui est agencée au niveau de la périphérie externe du stator (3), et au moins une bague externe (12), qui est agencée au niveau d'une surface (13) cylindrique interne du rotor (4), le second palier (10) présentant au moins une bague externe (14), qui est agencée au niveau d'une surface (15) cylindrique interne du stator (3) et au moins une bague interne (16), qui est agencée au niveau d'une surface (17) cylindrique externe d'un couvercle (18) qui est relié au rotor (4).

2. Agencement d'outil selon la revendication 1, **caractérisé en ce que** le couvercle (18) est relié à ladite au moins une bague interne (16) du second palier (10) et au rotor (4) et est pour le reste exempt d'une liaison à une autre pièce de machine de telle sorte que le rotor (4) est monté volant sur le stator (3).

3. Agencement d'outil selon la revendication 1 ou 2, **caractérisé en ce que** le stator (3) est relié de manière fixe à la zone d'extrémité d'un bras de meulage (7) en forme de barre ou de tube.

4. Agencement d'outil selon l'une des revendications 1 à 3, **caractérisé en ce qu'**au moins un enroulement de moteur (8) traversé par un courant est agencé au niveau de la périphérie externe du stator (3).

5. Agencement d'outil selon l'une des revendications 1 à 4, **caractérisé en ce que** le premier palier (9) et/ou le second palier (10) comprennent deux roulements à billes à contact oblique, les deux roulements à billes à contact oblique étant de préférence agencés selon un agencement en O.

6. Agencement d'outil selon l'une des revendications 1 à 5, **caractérisé en ce que** le rotor (4) présente, dans la zone de la surface d'appui (6) pour l'outil (5), en particulier pour l'outil de meulage, un filetage (19) destiné à recevoir un écrou de serrage (20).

7. Agencement d'outil selon l'une des revendications 1 à 6, **caractérisé en ce qu'**il comprend un capteur de position ou de rotation (21, 22) qui présente un moyen de mesure (21) qui est agencé au niveau du rotor (4) et présente au moins une tête de lecture (22) qui est agencée au niveau du stator (3) ou à un composant relié à celui-ci, en particulier au niveau du bras de meulage (7).

8. Agencement d'outil selon la revendication 7, **caractérisé en ce que** le capteur de position ou de rotation (21, 22) est agencé au niveau de la première position axiale (P1) ou de manière adjacente à celle-ci.

9. Agencement d'outil selon la revendication 3, **caractérisé en ce qu'**un joint (27) est agencé entre le bras de meulage (7) et le rotor (4).

10. Agencement d'outil selon la revendication 9, **caractérisé en ce que** le joint (27) est conçu sous forme de joint à air de barrage ou de joint à labyrinthe.
